# EUROPÄISCHE PATENTSCHRIFT

(11) **EP 1 039 181 B1**
(45) Veröffentlichungstag und Bekanntmachung des Hinweises auf die Patenterteilung: **17.11.2004**
(21) Anmeldenummer: 00106166.2
(22) Anmeldetag: 21.03.2000
(51) Int. Cl.: F16J 15/06, F16J 15/08, F02F 11/00

(54) **Zylinderkopfdichtung**
Cylinder head gasket
Joint de culasse

(30) Priorität: 23.03.1999 DE 19913092
(43) Veröffentlichungstag der Anmeldung: 27.09.2000
(73) Patentinhaber: REINZ-Dichtungs-GmbH, 89233 Neu-Ulm (DE)
(72) Erfinder: Göttel, Ralf, 89233 Neu-Ulm (DE)
(74) Vertreter: Pfenning, Meinig & Partner GbR

(56) Entgegenhaltungen:
- EP-A- 0 472 219
- DE-A- 4 111 533
- US-A- 4 364 226

## Beschreibung

Die Erfindung betrifft eine Zylinderkopfdichtung eines Verbrennungsmotors mit einer zumindest eine Brennraum-Durchgangsöffnung enthaltenden Dichtungsplatte, an der eine Sensoreinrichtung zum Erfassen eines vom Betriebsverhalten des Verbrennungsmotors abhängigen Meßwertes angeordnet ist.

Eine derartige Zylinderkopfdichtung eines Verbrennungsmotors ist aus der EP 0 482 164 B1 bekannt geworden. Die Dichtungsplatte weist eine Sensoreinrichtung mit mehreren Sensorelementen auf, die jeweils benachbart zu Brennraum-Einfassungen oder Brennraum-Dichtelementen an den Brennraum-Durchgangsöffnungen fest angebracht sind, beispielsweise in Einprägungen auf der Unterseite der Dichtungsplatte festgeklebt sind, und über Anschlußleitungen und Kontaktelemente mit einer Steuerund Überwachungseinheit verbunden werden können. Die Sensorelemente messen Bewegungen des Dichtspalts zwischen Motorblock und Zylinderkopf senkrecht zur Ebene der Dichtungsplatte, die durch Druckänderungen im zugeordneten Brennraum verursacht werden. Ein Austausch eines defekten Sensorelements erfordert den Ausbau der Zylinderkopfdichtung.

Aus der DE 691 06 081 T2 ist eine Zylinderkopfdichtung eines Verbrennungsmotors bekannt geworden, die eine zumindest eine Brennraum-Durchgangsöffnung enthaltende Dichtungsplatte aufweist, an der ein Drucksensor zum Erfassen des Verbrennungsdrucks im Brennraum des Verbrennungsmotors fest angebracht ist. Der Drucksensor ist in der Zylinderkopfdichtung in der Nähe des Brennraumes angeordnet und wird über einen Druckkanal vom Verbrennungsdruck beaufschlagt. Eine Anschlußleitung führt durch die Zylinderkopfdichtung zu einem am Außenrand der Dichtung angebrachten Anschlußteil.

Aus der DE 198 23 594 A1 ist eine Einrichtung zur optischen Erfassung von Kopferscheinungen während der Verbrennung bei Brennkraftmaschinen bekannt geworden, die einen in eine Zylinderkopfdichtung integrierten Lichtleiter aufweist, der den Brennraum mit einer Auswerteeinheit optisch verbindet.

Die DE 195 47 313 A1 beschreibt eine Vorrichtung zur Messung des Abstandes bzw. der Bewegung zwischen zwei durch eine Dichtung getrennten Maschinenteilen wie beispielsweise zwischen dem Motorblock und dem Zylinderkopf eines Verbrennungsmotors. In die zumindest teilweise aus nichtmetallischem Material bestehende Dichtung ist zumindest ein kapazitives und/oder induktives Impedanzelement derart eingebettet, daß sich bei einer Änderung des Abstandes des Maschinenteils eine Änderung des Impedanzwertes des Impedanzelements ergibt, wobei die Änderung des Impedanzwertes zur Bestimmung des Abstandes bzw. der Bewegung gemessen wird.

In der DE 43 11 838 A1 ist eine Zylinderkopfdichtung mit einem piezoelektrischen Sensor zur Aufnahme von Druckschwingungen beschrieben. Ein Piezoelement des Sensors ist in einem in seiner Dicke verformbaren Gehäuse in der Zylinderkopfdichtung aufgenommen und liegt über eine Gehäusewand an einer an der Zylinderkopfdichtung angrenzenden Dichtfläche zum Zylinderblock oder vom Zylinderkopf an. Über eine Kontaktzunge kann ein elektrischer Anschluß hergestellt werden.

Die DE 40 14 502 C2 offenbart ein Verfahren zum Einbau eines Sensors in eine formgepreßte Dichtung, insbesondere eine Zylinderkopfdichtung. Dabei wird der Sensor vor dem Pressen der Dichtung in das Dichtungsmaterial eingebracht und anschließend wird die Dichtung gepreßt.

Aus der DE411 15 33 A1 ist eine Klopfsensorvorrichtung für Zylinderkopfdichtungen bekannt. Die Sensoreinrichtung ist fest mit der Dichtung verbunden.

Der Erfindung liegt die Aufgabe zugrunde, eine gattungsgemäße Zylinderkopfdichtung derart weiterzubilden, daß defekte Sensorelemente ohne übermäßigen Montageaufwand austauschbar sind.

Die Aufgabe wird bei der oben angegebenen, gattungsgemäßen Zylinderkopfdichtung dadurch gelöst, daß die Dichtungsplatte einen Anschlußabschnitt zum lösbaren Anbringen eines Sensormoduls der Sensoreinrichtung und eine Meßwerterfassungsstelle zur Anordnung eines Sensorelements des Sensormoduls aufweist. Bei der erfindungsgemäßen Dichtung nach Anspruch 1 ist zumindest eine Meßwerterfassungsstelle für zumindest einen Sensor vom Anschlußabschnitt entfernt. Durch diese Gestaltung kann ein Sensormodul mit einem Sensorelement nach der Montage der Zylinderkopfdichtung angebracht und bei Bedarf ausgetauscht werden, ohne daß hierzu die Zylinderkopfdichtung demontiert und ausgetauscht oder das zu entfernende Sensorelement aus seiner festen Anbringung entnommen werden müßte, wobei eine Beschädigung der Anbringungsstelle nicht ausgeschlossen wäre. Die Meßwerterfassungsstelle ist vom Bereich des Anschlußabschnitts entfernt, wobei bei einer entsprechenden Anordnung des Anschlußabschnitts an der Dichtungsplatte mehrere Meßwerterfassungsstellen einem Anschlußabschnitt und damit auch einem Sensormodul zugeordnet sein können. Das Sensorelement kann an der Meßwerterfassungsstelle in unmittelbarem, mechanischen Kontakt mit der Dichtungsplatte oder mit an der Dichtungsplatte angrenzenden Bauteilen angekoppelt sein. Andererseits kann bei Verwendung eines entsprechenden Sensorelements auch eine berührungslose Ankopplung vorgesehen sein. Das Sensormodul kann über eine steckbare Leitung mit einer Überwachungs- und Steuereinrichtung oder Motorsteuerung verbunden sein.

Vorteilhafte Ausgestaltungen der Erfindung sind in den Unteransprüchen angegeben.

Erfindungsgemäß ist mindestens eine Meßwerterfassungsstelle vom Anschlußabschnitt entfernt angeordnet gemäß Anspruch 1. Damit lassen sich Meßwerte an beliebigen Stellen der Zylinderkopfdichtung erfassen, die für den Verbrennungsablauf charakteristisch sind. Über eine Zuleitung wird der erfaßte Meßwert zu dem Sensorelement des Sensormoduls übertragen.

Eine Zuleitung kann derart gestaltet sein, daß die Dichtungsplatte eine Ausnehmung aufweist, die sich vom Anschlußabschnitt bis zu der Meßwerterfassungsstelle erstreckt und das an die Ausnehmung angepaßte Sensorelement aufnimmt. Der Sensor kann an der Spitze eines der Ausnehmung angepaßten, z. B. länglichen Trägers oder Halteteils befestigt sein und damit an der gewünschten Meßwerterfassungsstelle angeordnet sein, auch wenn das Sensormodul von der Meßwerterfassungsstelle entfernt ist.

Die Meßwerterfassungsstelle kann beispielsweise benachbart zu der Brennraum-Durchgangsöffnung, zu einer Kühlwasser-Durchgangsöffnung oder einer Öl-Durchgangsöffnung angeordnet sein und die dort herrschende Temperatur erfassen.

Der Anschlußabschnitt ist zweckmäßigerweise an einem bei eingebauter Zyinderkopfdichtung freiliegenden Randbereich der Dichtungsplatte ausgebildet und beispielsweise als Aufsteckverbindung für das Sensormodul gestaltet. Das aufgesteckte Sensormodul kann durch Verschraubung, durch Rastklemmen oder durch andere Sicherungsmittel festgelegt werden, so daß es sich durch Vibrationen im Betrieb des Motors nicht von dem Anschlußabschnitt lösen kann.

Das Sensorelement kann ein Wegmeßelement sein, mit dem Bewegungen innerhalb der Zylinderkopfdichtung wie auch Bewegungen der an die Zylinderkopfdichtung anliegenden Motorbauteile, wie beispielsweise Motorblock und Zylinderkopf, gemessen werden können, die z. B. durch Druckschwankungen in den Brennräumen im Betrieb des Motors auftreten. Das Sensorelement kann auch ein Thermoelement sein, das die Temperatur an der Dichtungsplatte an dem Ort der Meßwerterfassungsstelle erfaßt, wie z. B. in der Nähe des Brennraumes oder einer Durchtrittsöffnung für Kühlwasser oder Öl. Als Sensorelemente können des weiteren Kraft-, Druck-, Dehnungs- oder Beschleunigungsmeßelemente verwendet werden, die als DMS-, piezoelektrische, piezoresistive, kapazitive, magnetische, elektromagnetische oder Wirbelstrom-Sensoren oder auch als Lichtwellenleiter und Mikromechaniksensoren ausgebildet sein können.

Das Sensormodul kann mehrere gleiche oder gleichartige Sensorelemente für eine oder mehrere Meßwerterfassungsstellen aufweisen, die einem oder mehreren Brennräumen zugeordnet sein können. Andererseits kann das Sensormodul auch unterschiedliche Sensorelemente in Verbindung mit Meßwerterfassungsstellen in einer gewünschten Anordnung aufweisen.

Wenn die Dichtungsplatte aus mehreren Lagen aufgebaut ist, kann eine dieser Lagen zur Meßwerterfassung vorbereitet sein. So kann z. B. ein Sensorelement in einer Lage integriert sein, wobei der erfaßte Meßwert über eine Leitung in dieser Lage zu dem Anschlußabschnitt des Sensormoduls geführt und dort von dem im Sensormodul integrierten Sensorelement aufgenommen wird. Die oben beschriebene Ausnehmung für ein Sensorelement kann in einer solchen Lage der Dichtungsplatte integriert sein.

Nachfolgend wird die Erfindung anhand von Ausführungsbeispielen unter Bezugnahme auf Zeichnungen näher erläutert. Es zeigt:
- Fig. 1: in einer Draufsicht in einer Teildarstellung eine Zylinderkopfdichtung mit einem Sensormodul, die nicht Gegenstand der Erfindung ist;
- Fig. 2: in einer Draufsicht in einer Teildarstellung eine Dichtungsplatte der Zylinderkopfdichtung mit einem Anschlußabschnitt für ein Sensormodul;
- Fig. 3: in einer Ansicht gemäß Fig. 1 in vergrößerter Darstellung das an der Dichtungsplatte angeordnete Sensormodul;
- Fig. 4: in einer Vorderansicht gemäß Pfeilrichtung X in Fig. 1 das an der Dichtungsplatte angeordnete Sensormodul (teilweise geschnitten);
- Fig. 5: in einer Seitenansicht gemäß Pfeilrichtung Y in Fig. 1 das an der Dichtungsplatte angeordnete Sensormodul (teilweise geschnitten);
- Fig. 6: in einer Seitenansicht gemäß Fig. 5 das an der Dichtungsplatte angeordnete Sensormodul (in vergrößerter Darstellung und teilweise geschnitten);
- Fig. 7: in einer Draufsicht in einer Teildarstellung ein Ausführungsbeispiel einer erfindungsgemäßen Zylinderkopfdichtung mit einem Sensormodul;
- Fig. 8: in einer Draufsicht in einer Teildarstellung die Dichtungsplatte der Zylinderkopfdichtung mit einem Anschlußabschnitt für ein Sensormodul;
- Fig. 9: in einer Ansicht gemäß Fig. 7 in vergrößerter Darstellung das an der Dichtungsplatte angeordnete Sensormodul;
- Fig. 10: in einer Vorderansicht gemäß Pfeilrichtung X' in Fig. 1 das an der Dichtungsplatte angeordnete Sensormodul (teilweise geschnitten);
- Fig. 11: in einer Seitenansicht gemäß Pfeilrichtung Y' in Fig. 1 das an der Dichtungsplatte angeordnete Sensormodul (teilweise geschnitten); und
- Fig. 12: in einer Seitenansicht gemäß Fig. 11 das an der Dichtungsplatte angeordnete Sensormodul (in vergrößerter Darstellung und teilweise geschnitten).

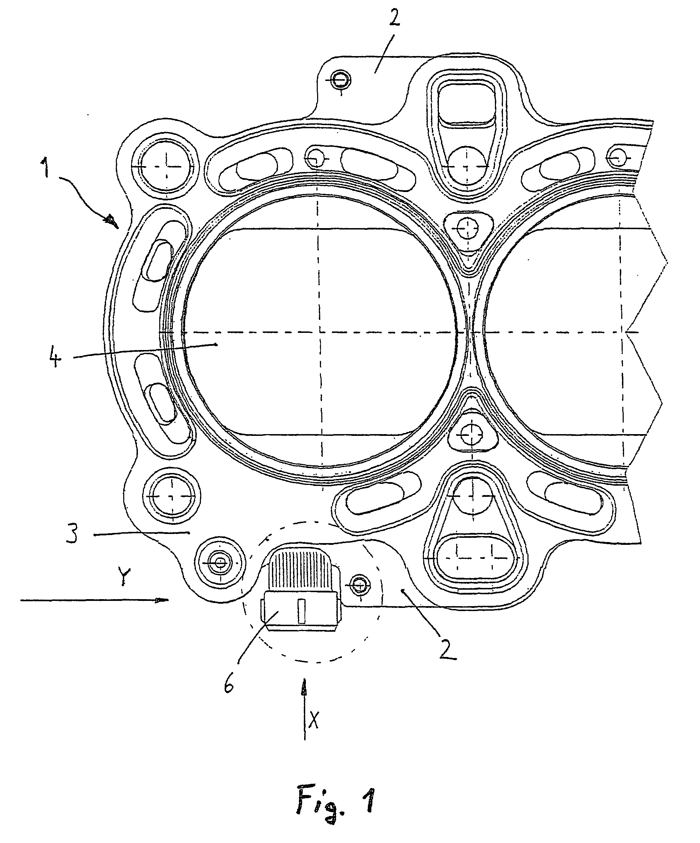

Eine in Fig. 1 ausschnittsweise dargestellte Zylinderkopfdichtung 1 (siehe Fig. 1) weist eine auch als Trägerblech bezeichnete Dichtungsplatte 2 auf. Auf der Ober- und/oder der Unterseite der Dichtungsplatte 2 können in bekannter Weise weitere Dichtungsbleche angeordnet sein, wie z. B. das dargestellte obere Dichtungsblech 3, um eine mehrlagige Zylinderkopfdichtung 1 zu bilden. Dabei können sowohl die Dichtungsplatte 2 wie auch die weiteren Dichtungsbleche Sicken und Stopper zum Abdichten von Durchgangsöffnungen 4 für zugeordnete Brennräume des Verbrennungsmotors aufweisen.

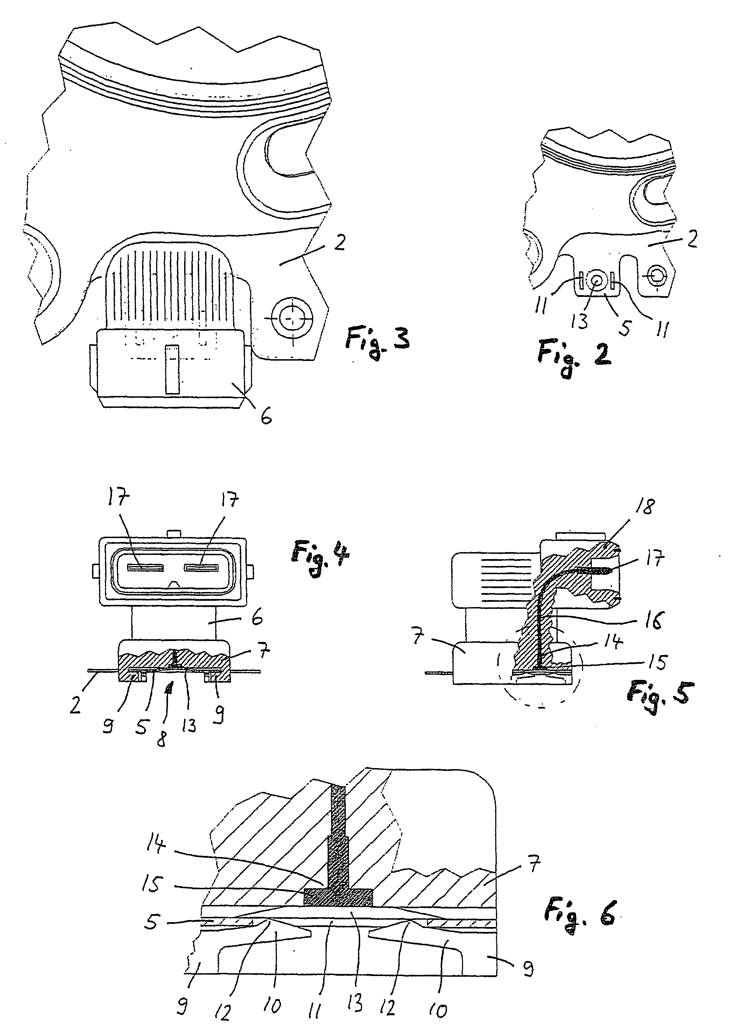

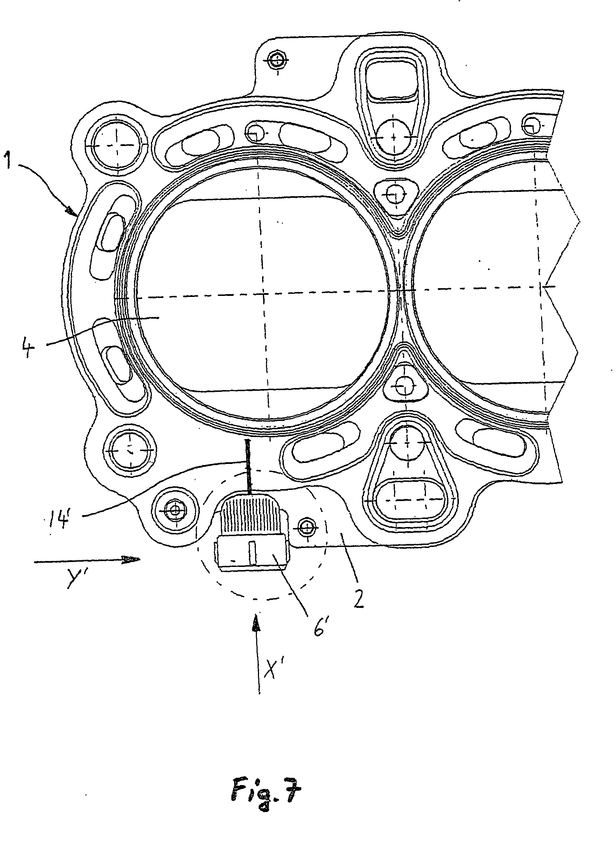

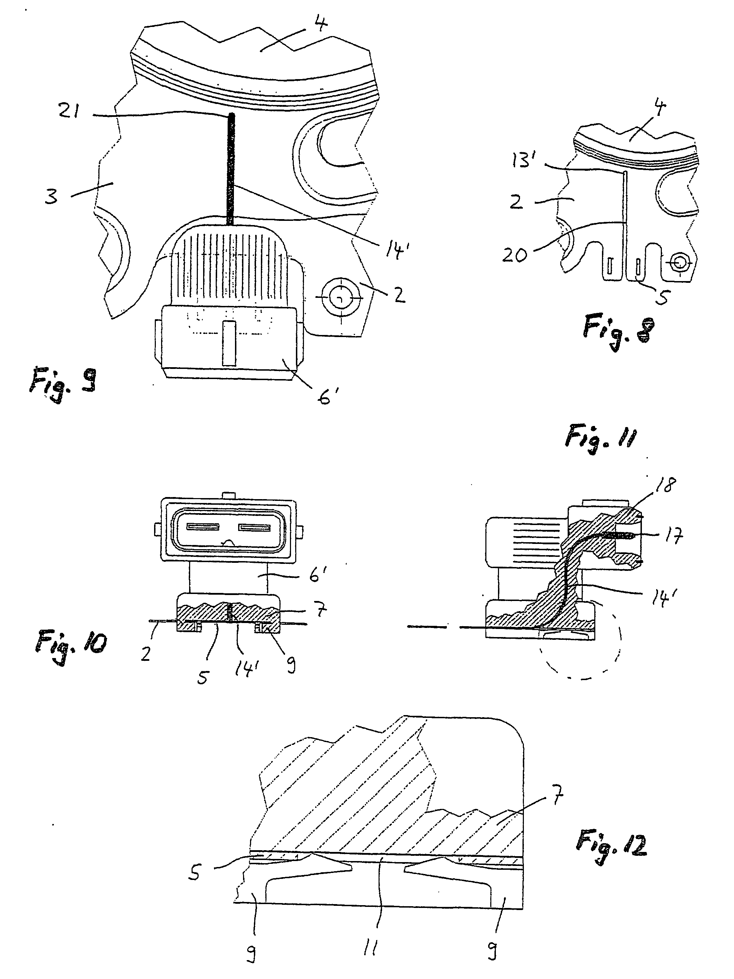

An der Dichtungsplatte 2 ist ein Anschlußabschnitt 5 ausgebildet (siehe Fig. 2), an dem ein Sensormodul 6 durch Aufstecken angebracht werden kann (siehe die vergrößerten Darstellungen der Fig. 3 bis 6). Der dargestellte Anschlußabschnitt 5 ist an einem freien Rand der Dichtungsplatte 2 zungenförmig ausgebildet. Das Sensormodul 6 weist einen Steckfuß 7 auf mit einer an den zungenförmigen Anschlußabschnitt 5 angepaßten schlitzförmigen Aufnahmeöffnung 8 und den eingefügten Anschlußabschnitt 5 umgreifenden Haltefingern 9 mit elastischen Rastklemmen 10, die in zwei Aussparungen 11 des Anschlußabschnitts 5 mit einem jeweiligen Haltevorsprung 12 eingreifen, wenn das Sensormodul 6 in seiner vorgesehenen Rast- oder Betriebsposition an der Dichtungsplatte 2 angeordnet ist. Am Anschlußabschnitt 5 weist die Dichtungsplatte 2 zwischen den beiden Aussparungen 11 eine Meßwerterfassungsstelle 13 in Form einer zur Oberseite der Dichtungsplatte 2 hin geformten Erhebung auf, die z. B. als runde Fläche durch Prägen der Dichtungsplatte 2 hergestellt ist. Das Sensormodul 6 enthält als Sensorelement ein Thermoelement 14, das derart an der Aufnahmeöffnung 8 angeordnet ist, daß ein Kontaktbereich 15 des Thermoelements 14 an der Meßwerterfassungsstelle 13 direkt anliegt, wenn das Sensormodul 6 in seiner in den Fig. 3 bis 6 dargestellten Betriebsposition an der Dichtungsplatte 2 angeordnet ist. Eine im Sensormodul 6 integrierte Anschlußleitung 16 verbindet den Kontaktbereich 15 mit zwei Kontaktstiften 17 eines Steckerteils 18 des Sensormoduls 6 zum Anschluß einer mit einer Computereinheit oder Motorsteuer- und Überwachungseinheit verbundenen Leitung.

Das in den Fig. 7 bis 12 dargestellte erfindungsgemäße Ausführungsbeispiel einer Zylinderkopfdichtung weicht von der vorangehend beschriebenen Zylinderkopfdichtung in der Gestaltung des Sensormoduls 6' ab. Der Anschlußabschnitt 5 dieser Dichtungsplatte 2 weist eine längliche, schlitzförmige Ausnehmung 20 auf, die sich vom Anschlußabschnitt 5 bis in die Nähe der Brennraum-Durchgangsöffnung 4 erstreckt und eine vordere Meßwerterfassungsstelle 13' festlegt. Das Sensormodul 6', das im wesentlichen entsprechend dem in den Fig. 1 bis 6 dargestellten Sensormodul 6 aufgebaut ist, enthält ein Sensorelement 14' mit einer verlängerten Halterung, die sich von der Aufnahmeöffnung 8 am Steckfuß 7 lanzenartig nach vorne erstreckt und beim Aufstecken des Sensormoduls 6' in die Ausnehmung 20 eingeschoben wird, so daß eine Meßspitze 21 des Sensorelements 14', beispielsweise ein Thermoelement, an der vorderen Meßwerterfassungsstelle 13' angeordnet wird. Auf diese Weise kann das Sensormodul 6' mit einer entfernt liegenden Meßwerterfassungsstelle 13' verbunden sein.

Die in der Dichtungsplatte 2 enthaltene Ausnehmung 20 kann durch ein auf der Dichtungsplatte 2 liegendes Dichtungsblech 3 abgedeckt sein. Jedoch kann in dem Dichtungsblech 3 eine deckungsgleiche Ausnehmung 21 ausgebildet sein, so daß für die lanzenartige Halterung ein größerer Aufnahmequerschnitt zur Verfügung steht.

Das Sensormodul 6 bzw. 6' kann auch zwei oder mehrere gleichartige oder unterschiedliche Sensorelemente aufweisen. Zu diesem Zweck enthält der Aufnahmeabschnitt beispielsweise eine Meßwerterfassungsstelle für den unmittelbaren Kontakt mit dem Sensormodul sowie eine entfernte Meßwerterfassungsstelle, die über eine Verlängerung erreicht wird.

## Patentansprüche

1. Zylinderkopfdichtung (1) eines Verbrennungsmotors mit einer zumindest eine Brennraum-Durchgangsöffnung enthaltenden Dichtungsplatte (2) sowie einer Sensoreinrichtung umfassend mindestens ein Sensorelement (14') und ein Sensormodul (6') zum Erfassen eines vom Betriebsverhalten des Verbrennungsmotors abhängigen Meßwertes, wobei
die Dichtungsplatte (2) einen Anschlußabschnitt (5) zum bei eingebauter Zylinderkopfdichtung lösbaren Anbringen des Sensormoduls (6, 6') der Sensoreinrichtung und mindestens eine Meßwerterfassungsstelle (13') zur Anordnung des(r) Sensorelemente(s) (14', 21) des Sensormoduls (6') aufweist,
**dadurch gekennzeichnet, daß** zumindest eine Meßwerterfassungsstelle (13') zumindest für ein Sensorelement (14') vom Anschlußabschnitt (5) entfernt angeordnet ist, und daß die Dichtungsplatte (2) eine Ausnehmung (20) aufweist, die sich vom Anschlußabschnitt (5) bis zu der Meßwerterfassungsstelle (13') erstreckt und das an die Ausnehmung (20) angepaßte Sensorelement (14') aufnimmt.

2. Zylinderkopfdichtung nach Anspruch 1,
**dadurch gekennzeichnet, daß** eine Meßwerterfassungsstelle (13') benachbart zu der Brennraum-Durchgangsöffnung (4) oder einer Kühlwasser-Durchgangsöffnung angeordnet ist.

3. Zylinderkopfdichtung nach Anspruch 1 oder 2,
**dadurch gekennzeichnet, daß** der Anschlußabschnitt (5) an einem bei eingebauter Zyinderkopfdichtung (1) freiliegenden Randbereich der Dichtungsplatte (2) ausgebildet und als Aufsteckverbindung für das Sensormodul (6') gestaltet ist.

4. Zylinderkopfdichtung nach einem der Ansprüche 1 bis 3,
**dadurch gekennzeichnet, daß** das Sensormodul zumindest eine Rastklemme (10) aufweist.

5. Zylinderkopfdichtung, nach einem der Ansprüche 1 bis 3,
**dadurch gekennzeichnet, daß** das Sensorelement (14') ein Thermoelement (14') ist.

6. Zylinderkopfdichtung nach einem der Ansprüche 1 bis 3,
**dadurch gekennzeichnet, daß** das Sensorelement (14') ein Kraft-, Weg-, Druck-, Dehnungs- oder Beschleunigungsmeßelement ist.

7. Zylinderkopfdichtung nach einem der Ansprüche 1 bis 6,
**dadurch gekennzeichnet, daß** das Sensormodul (6') zumindest zwei Sensorelemente aufweist.

8. Zylinderkopfdichtung nach Anspruch 7,
**dadurch gekennzeichnet, daß** die zumindest zwei Sensorelemente unterschiedliche Sensorelemente sind.

9. Zylinderkopfdichtung nach einem der Ansprüche 1 bis 8,
**dadurch gekennzeichnet, daß** die Dichtungsplatte (2) aus mehreren Lagen aufgebaut und zumindest eine Lage zur Meßwerterfassung vorbereitet ist.

10. Zylinderkopfdichtung nach Anspruch 9,
**dadurch gekennzeichnet, daß** die Ausnehmung (20) für das Sensorelement (14') in der einen für die Meßwerterfassung vorbereiteten Lage ausgebildet ist.

11. Zylinderkopfdichtung nach einem der Ansprüche 1 bis 10,
**dadurch gekennzeichnet, daß** das Sensormodul (6') mittels einer steckbaren Leitung mit einer Meßwertverarbeitungseinrichtung verbunden ist.

## Claims

1. Cylinder head gasket (1) of a combustion engine with at least one sealing plate equipped with a combustion chamber passage opening as well as a sensor means incorporating at least one sensor element (14') and one sensor module (6'), for the recording of a measurement value dependent upon the operational characteristics of the combustion engine, whereby the sealing plate (2) incorporates a connection section (5), for the disconnectable affixing of the sensor module (6') of the sensor means when the cylinder head gasket is installed, and at least one measurement value recording point (13'), for the arrangement of the sensor element(s) (14', 21) of the sensor module (6'), **characterised in that** the at least one measurement value recording point (13') for at least one sensor element (14') is positioned at a distance from the connection section (5), and **in that** the sealing plate (2) incorporates a recess (20), whereby the same extends from the connection section (5) to the measurement value recording point (13') and receives the sensor element (14') suited to fit into the said recess (20).

2. Cylinder head gasket according to Claim 1, **characterised in that** a measurement value recording point (13') is positioned adjacent to the combustion chamber passage opening (4) or a cooling water passage opening.

3. Cylinder head gasket according to Claim 1 or 2, **characterised in that** the connection section (5) is formed within an edge area of the sealing plate (2) which is exposed when the cylinder head gasket (1) is installed, and **in that** the same takes the form of a plug connection for the sensor module (6').

4. Cylinder head gasket according to one of the preceding Claims 1 to 3, **characterised in that** the sensor module incorporates at least one engaging clip (10).

5. Cylinder head gasket according to one of the preceding Claims 1 to 3, **characterised in that** the sensor element (14') consists of a thermocouple (14').

6. Cylinder head gasket according to one of the preceding Claims 1 to 3, **characterised in that** the sensor element (14') consists of a force, path, expansion or acceleration measurement element.

7. Cylinder head gasket according to one of the preceding Claims 1 to 6, **characterised in that** the sensor module (6') incorporates at least two sensor elements.

8. Cylinder head gasket according to Claim 7, **characterised in that** the at least two sensor elements consist of different sensor elements.

9. Cylinder head gasket according to one of the preceding Claims 1 to 8, **characterised in that** the sealing plate (2) is constructed of several layers, and **in that** at least one layer is prepared for the recording of measurement values.

10. Cylinder head gasket according to Claim 9, **characterised in that** the recess (20) for the sensor element (14') is arranged in a location that is prepared for the recording of measurement values.

11. Cylinder head gasket according to one of the preceding Claims 1 to 10, **characterised in that** the sensor module (6') is connected to a measurement value processing means with the aid of a plug-in lead.

## Revendications

1. Joint de culasse (1) d'un moteur à combustion interne comportant au moins une plaque d'étanchéité (2) contenant au moins une ouverture de passage en liaison avec la chambre de combustion ainsi qu'un dispositif de capteur comprenant au moins un élément de détection (14') et un module de capteur (6') pour détecter une valeur de mesure qui dépend du comportement de fonctionnement du moteur à combustion interne, dans lequel la plaque d'étanchéité (2) comporte une section de raccordement (5) pour réaliser, lorsque le joint de culasse est monté, le montage amovible du module de capteur (6') du dispositif à capteur et au moins un point (13') de détection de valeur de mesure pour la mise en place du ou des éléments de détection (14', 21) du module de capteur (6'), **caractérisé en ce qu'**au moins un point (13') de détection de valeur de mesure est disposé, au moins pour un élément de détection (14'), de manière à être éloigné de la section de raccordement (5), et que la plaque d'étanchéité (2) comporte un évidement (20), qui s'étend depuis la section de raccordement (5) jusqu'au point (13') de détection de la valeur de mesure et reçoit un élément de détection (14') adapté à l'évidement (20).

2. Joint de culasse selon la revendication 1, **caractérisé en ce qu'**un point (13') de détection de la valeur de mesure est disposé au voisinage de l'ouverture (4) de passage aboutissant à la chambre de combustion ou d'une ouverture de passage pour l'eau de refroidissement.

3. Joint de culasse selon la revendication 1 ou 2, **caractérisé en ce que** la section de raccordement (5) est formée dans une zone marginale de la plaque d'étanchéité (2), qui est libérée dans le cas où le joint de culasse (1) est monté, et est agencée sous la forme d'un système de liaison à enfichage pour le module de capteur (6').

4. Joint de culasse selon l'une des revendications 1 à 3, **caractérisé en ce que** le module de capteur comporte au moins une pince d'encliquetage (10).

5. Joint de culasse selon l'une des revendications 1 à 3, **caractérisé en ce que** l'élément de détection (14') est un thermocouple (14').

6. Joint de culasse selon l'une des revendications 1 à 3, **caractérisé en ce que** l'élément de détection (14') est un élément de mesure de force, de déplacement, de pression, d'allongement ou d'accélération.

7. Joint de culasse selon l'une des revendications 1 à 6, **caractérisé en ce que** le module de capteur (6') comporte au moins deux éléments de détection.

8. Joint de culasse selon la revendication 7, **caractérisé en ce que** les au moins deux éléments de détection sont des éléments de détection différents.

9. Joint de culasse selon l'une des revendications 1 à 8, **caractérisé en ce que** la plaque d'étanchéité (2) est constituée de plusieurs couches et qu'au moins une couche est préparée pour la détection de valeurs de mesure.

10. Joint de culasse selon la revendication 9, **caractérisé en ce que** l'évidement (20) pour l'élément de détection (14') est formé dans la couche préparée pour la détection de valeur de mesure.

11. Joint de culasse selon l'une des revendications 1 à 10, **caractérisé en ce que** le module de capteur (6') est relié, au moyen d'une ligne enfichable, à un dispositif de traitement de valeurs de mesure.
